# EUROPEAN PATENT SPECIFICATION

(11) **EP 0 444 330 B1**
(45) Date of publication and mention of the grant of the patent: **30.11.1994**
(21) Application number: 90203461.0
(22) Date of filing: 19.12.1990
(51) Int. Cl.: B29C 67/12, B29B 17/00, B32B 31/04

(54) **Method for laminating reinforced thermoplastic strips and a beam thus produced**
Verfahren zum Kaschieren von verstärkten thermoplastischen Platten und danach hergestellte Balken
Procédé pour le laminage de feuilles en matériaux thermoplastique et poutre ainsi obtenue

(30) Priority: 29.01.1990 NL 9000213
(43) Date of publication of application: 04.09.1991
(73) Proprietor: VAN BESOUW B.V., NL-5051 LA Goirle (NL)
(72) Inventor: Beune, Joannes Hendrikus, 7557 PB Hengelo (NL)
(74) Representative: Barendregt, Frank, Drs.

(56) References cited:
- EP-A- 0 102 711
- EP-A- 0 133 825
- EP-A- 0 322 316
- EP-A- 0 340 395
- DE-A- 2 722 774
- FR-A- 2 228 588
- GB-A- 1 373 782
- GB-A- 1 439 353
- US-A- 4 402 780
- JAPANESE PATENTS GAZETTE, week 8922, 10th May 1989, section Ch, class A, abstract no. 84-297678 [48], Derwent Publications Ltd, London, GB; & JP-A-59 184 612 (TORAY IND. INC.)

## Description

The invention relates primarily to a method for forming an object from reinforced plastic according to the preamble of claim 1.

Such a method is known from EP-A 0.102.711. In such a method, a band of continuous carbon fibres, impregnated with a polyetheretherketone is cut into pieces of suitable dimensions. The pieces are stacked upon each other and pressed in a compression moulding tool heated to 400°C. Thereafter the temperature is reduced to 100°C maintaining the applied pressure. Then the mould is allowed to cool to ambient temperature without applied pressure.

Another method generally known is also frequently used for forming plastic objects which have to meet specific strength requirements. In such a method, for example, a fibrous reinforcing material such as polyester or glass wool is impregnated with a suitable curable synthetic resin, after which the composite thus formed is given a suitable shape and the composite is cured.

Generally, the material is shaped prior to the curing.

It has now been found that according to the invention reinforced plastic objects can be produced by a method of the above mentioned type according to the characterizing portion of claim 1. In the so produced object the original properties of the fibre-reinforced thermoplastic material are maintained.

The class of fibre-reinforced thermoplastic material includes, for example, a thermoplastic material completely finished per se which becomes available as such as waste from a production of such material or as residual material which is fit for destruction. By combining such a material completely finished per se in a suitable form and bonding together the surfaces coming into contact with one another, with the aid of heating, a very usable application is provided for this material which can otherwise be little used as such. The heating used to cause the surfaces of the fibre-reinforced material to bond to one another can be of normal type such as convection heating and radiation heating.

Heating with the aid of infra red radiators is preferred in the last-mentioned case.

During the production of fibre-reinforced plastic material, the fibrous material, such as a fibrous mat, will in many cases be coated with an amount of plastic which is just sufficient to cover all the fibres.

In forming an object from reinforced plastic according to the present invention, use being made of a fibre-reinforced thermoplastic material which is converted to a suitable form, at least parts of the available surfaces are brought into intimate contact with one another and the material thus combined is subjected to a heating until bonding of the surfaces in contact with one another is obtained, followed by cooling to below the softening point of the thermoplastic while maintaining the intimate contact, wherein said suitable form is such that the reinforcing function and cohesion of the reinforcing fibre are retained, and that prior to bringing the surfaces into intimate contact, an amount of unhardened coating material is applied which contains at least an amount of plastic, which is optionally the same plastic as the plastic of the fibre-reinforced plastic material.

Such an unhardened coating material may be, for example, a dispersion of a suitable polar plastic in plasticiser such as a dispersion which has been prepared by dispersing powdered polyvinyl chloride in a plasticiser such as dioctyl phthalate or diisodecyl phthalate, possibly with the addition of small amounts of diluent such as white spirit.

The addition of such an amount of unhardened coating material is not troublesome and this amount of material will also be converted into a hardened material by using heating.

In particular, a strong and especially creep-resistant product is obtained with the aid of the method according to claim 2. Such additional reinforcing material, such as, for example, fibres, fabrics or mats of polyester, steel wire and the like in combination with an amount of additional coating material, results in particular in a stiffening and creep resistance of the plastic which is located, after shaping the object, in or near the surfaces which have been brought into intimate contact with one another and have been bonded to one another.

In connection with the invention as described above it is pointed out, however, that it is known per se to make objects starting from fibre-reinforced plastic. In this known method, a fibre-reinforced plastic product is shredded, followed by a thorough cleaning of the shreds formed. Then the shreds are pressed together in a mould and heated in the mould until fusion of the shreds is obtained; then the product is cooled.

In such an object, the reinforcing material has lost its reinforcing function as a consequence of the shredding operation.

The present application relates, however, to a method in which a fibre-reinforced material is shaped to form an object in a manner such that, in the shaped object, the reinforcing material has retained its reinforcing function and cohesion.

In the present method, the cleaning may also, as a rule, be omitted.

Advantageously, the thermoplastic of the fibre-reinforced material is a polar plastic, while the heating used is microwave heating. Known examples of a thermoplastic having a polar nature are polyvinyl chloride, polystyrene, polyacrylnitrile, polyacrylic acid ester, polymethacrylic acid ester, polyvinyl acetate, polyvinyl ether, polytrifluorochloroethylene and mixtures of said polymers, and also copolymers prepared by starting from monomers of the abovementioned plastics.

Microwave heating is understood as meaning a heating which is based on the interaction of microwaves and matter. An incident wave will be partly transmitted and partly reflected by the material. The wave entering a material may result in heating if the material is sufficiently capable of being penetrated by the microwaves of the wave length used. Metals cannot therefore be heated in this way. Because the wave penetrates the material, the microwave heating takes place from the inside outwards, which is in contrast to conventional heating. The wave lengths used for microwave heating are up to a few millimetres.

A known example of a microwave heating is provided by the so-called magnetron which, as will be specified in yet greater detail, is very usable for the method according to the present invention.

The surface of an object obtained with the aid of the method according to the invention can advantageously be provided, subsequent to the heating, with a plastic coating encapsulating the object using conventional techniques. Such an additional plastic coating is preferably applied in those cases in which the surface of the object needs to have a certain desired structure or a colour.

Many possibilities are known to the person skilled in the art for applying such an encapsulating coating; very advantageously, such a coating will be applied by extrusion, the plastic used being chosen in accordance with the nature of the base plastic, such as polar or non-polar. Very advantageously, an object is formed in the method according to claim 6. Such polyvinyl chloride reinforced with polyester fabric is produced, for example, for forming lorry coverings, tent ground sheets, water storage tank wall lining etc.

Such a material is produced by starting from a sheet of polyester fabric which is provided on both sides by blade coating with a layer of polyvinyl chloride plastisol, after which, in a heating step, the polyvinyl chloride particles from the plastisol coating material are sintered to one another to form a completely continuous coating. As specified above, the plastisol is a dispersion of polyvinyl chloride powder in plasticiser, optionally provided with an additional amount of diluent such as white spirit. After forming a sheet thus coated with PVC, a section is usually cut away from it along the edges because the latter have, in certain cases, a certain degree of irregularity.

In the method according to the invention, it is possible to process such materials removed from the edge of a sheet further while maintaining the properties of the high-quality reinforcing material which may be, for example, a polyester fabric.

In the object produced according to the method of the invention, very good mechanical properties are therefore accompanied by costs which may be relatively low if the starting material used is waste material. Of course, the invention is not limited to using waste material; if a very uniform distribution of reinforcing material in a plastic object has to be obtained, a fibre-reinforced sheet-type material can be produced in a conventional way, after which the said material is converted with the aid of the method of the invention into a fibre-reinforced object. Like any object which is obtained according to the method, the object thus produced has an extremely uniform distribution of the reinforcing material throughout the material of the object. In particular, strip-type pieces of material are combined in the method according to claim 7. In this method the heating is preferably carried out by magnetron heating.

As described above, the method according to the invention is applied, in particular, to strip-type pieces of polyvinyl chloride material which has been reinforced with polyester fabric.

Subsequently, the polyvinyl chloride object thus formed, which is reinforced with polyester fabric, is very advantageously coated on the outside with polyvinyl chloride, for example by extrusion.

The invention as described above is not limited to the use of strip-type pieces of material. A sheet-type material, for example, may also be folded in a manner such that sections of the surface thereof will be in contact with one another, as a result of which fusion can be brought about. Film-type pieces of material may also be laid on top of one another and be bonded to one another under pressure. Film-type pieces of material may also partially overlap one another, the overlapping sections being joined to one another by heating, for example microwave heating such as magnetron heating.

The invention also relates to the use of a method as defined in claim 10.

The invention will now be explained by reference to the drawing, wherein:
- Figure 1 shows diagrammatically a picture of carrying out the method according to the invention,
- Figure 2 shows a number of attractive embodiments of the cross-sectional shape of the material combined for bonding,
- Figure 3 shows diagrammatically another embodiment of the method according to the invention,
- Figure 4 shows yet another possibility of combining material, and
- Figure 5 also shows a method of combination of starting material in the method according to the invention.

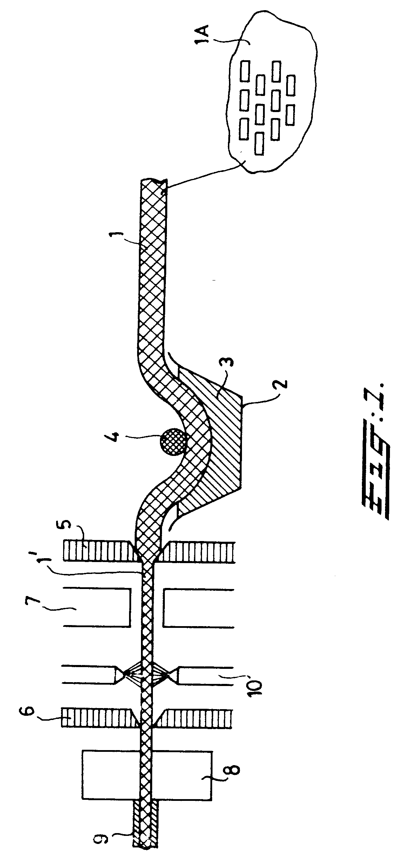

In Figure 1, the reference 1 indicates a collection of strips of material which consist in this case, for example, of strips of PVC which has been reinforced with polyester fabric. The strips of PVC material are waste strips which originate from the production of sheet-type PVC material which has been reinforced with polyester fabric.

The nature of the combination of the bundle 1 is shown diagrammatically on an enlarged scale at 1a. The loose bundle 1 is passed with the aid of guide means 4, such as a rod or rou, through a trough-type container 2 which is filled with a suitable PVC paste 3. The PVC paste penetrates into the cavities between the various strips so that each strip is essentially also surrounded by a small additional amount of unhardened PVC. The bundle of strips is then passed through an opening which is left free in a sizing component 5. In the said component 5, the bundle 1 is compressed to form the bundle 1' in which process an intimate contact is achieved between all the strips of the bundle 1. In addition, the amount of PVC paste absorbed in the trough-like container 2 is considerably reduced because the excess is removed by the compression operation. The sizing element 6 ensures that the compression of the strips is maintained; in the compressed state, a microwave heating is carried out with the aid of a magnetron element 7 which should have an intensity and a duration such that a complete bonding of the strips to one another occurs and the amount of PVC additionally added is at least partially hardened by sintering. Immediately subsequently to the magnetron heating, cooling takes place at 10 to a temperature which is below the softening point of the plastic. Expediently, a stream of water or cooling air is used for cooling. The way of cooling is not limited to supplying a coolant with the aid of one or more nozzles; the formed material can also be passed through a container containing circulating coolant.

Subsequently to the combining, magnetron heating and cooling, an external coating 9 can also be applied at 8 to the object stiffened by magnetron heating, with the aid of a transverse extrusion head, followed by cooling (not shown).

The method shown in Figure 1 is suitable, in particular, for forming elongated reinforced thermoplastic objects. After forming, the said objects can be divided by sawing into poles, beams and the like of suitable length.

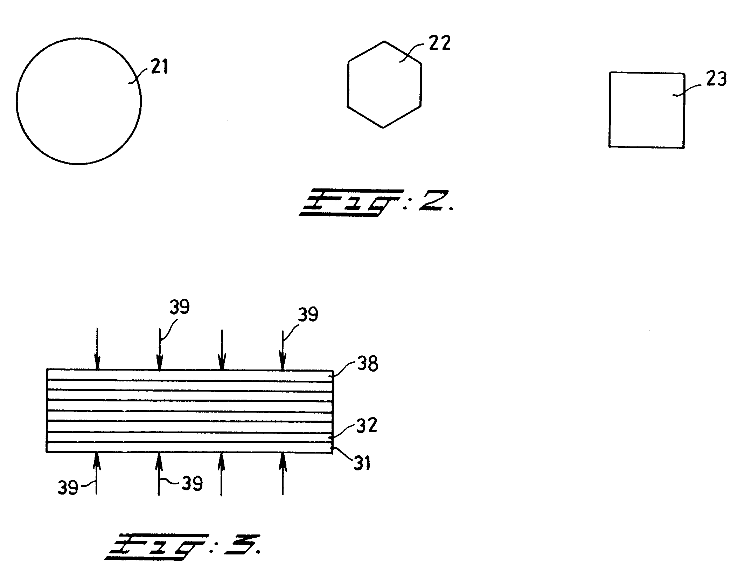

In Figure 2, 21, 22 and 23 indicate possible shapes of the sizing devices 5 and 6 from Figure 1; of course, the number of possible forms is not limited to these three and a suitable shape can be chosen depending on the final use of the product.

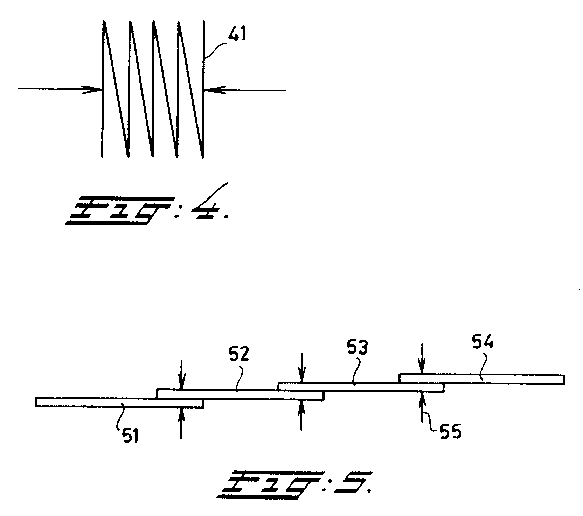

Figure 3 outlines a situation in which laminar, fibre-reinforced plastic parts are laid on top of one another to form a stack 31 .... 38. 39 indicates that a compression force acts on the stack thus formed; microwave heating is used while the stack is under the influence of the compressive force used. For application of the compressive force, use may be made of mechanical means such as pressing. If a suitable circumferential sealing of the laminar parts is used, use can be made of vacuum sucked between the plates, so that a very intimate contact of the plates is ensured. Such an embodiment has, in addition, the advantage that the magnetron action can be carried out by placing the magnetron elements above and below the stack.

Figure 4 shows another method of combination. A flexible plate consisting, for example, of PVC which has been reinforced with polyester fabric is folded as shown and compressed to form an elongated object and is subjected in that state to microwave heating, as a result of which the surfaces in contact with one another fuse together.

Figure 5 shows that laminar parts 51 to 54 can adjoin one another with a slight overlap, compression of the overlapping position and microwave heating ensuring the necessary bonding.

In the situation outlined diagrammatically in Figures 3, 4 and 5 the supply of an additional amount of unhardened coating material is not shown. The product which is obtained according to the situation outlined in Figures 3-5 can be processed further if necessary, until the desired final form is obtained.

## Claims

1. Method for forming an object from reinforced plastic, wherein fibre-reinforced thermoplastic material (1) is converted to a suitable form, at least parts of the available surfaces are brought into intimate contact with one another and the material (1') thus combined is subjected to a heating until bonding of the surfaces in contact with one another is obtained, followed by cooling to below the softening point of the thermoplastic while maintaining the intimate contact, characterised in that said suitable form is such that the reinforcing function and cohesion of the reinforcing fibre are retained and that, prior to bringing surfaces into intimate contact, an amount of unhardened coating material (3) is applied which contains at least an amount of plastic which is optionally the same plastic as the plastic of the fibre-reinforced plastic material (1).

2. Method according to claim 1, characterised in that an additional amount of reinforcing material is added to the fibre-reinforced thermoplastic material (1) prior to bringing the surfaces of the fibre-reinforced material into intimate contact with one another.

3. Method according to one or more of the preceding claims 1 to 2 inclusive, characterised in that the thermoplastic in the fibre-reinforced material (1) is a plastic having a polar nature and the heating is microwave heating (7).

4. Method according to one or more of claims 1-3, characterised in that, subsequently to the heating step (7), a plastic coating (9) encapsulating the object is applied using conventional techniques (8).

5. Method according to claim 4, characterised in that a formed object is coated by extrusion with a suitable plastic having a nature which corresponds to the nature of the thermoplastic of the fibre-reinforced material.

6. Method according to one or more of claims 1-5, characterised in that the plastic material (1) is polyvinyl chloride reinforced with polyester fabric.

7. Method according to claim 6, characterised in that strip-type pieces of material are combined, in that the combined material (1) is passed through a container (2) containing polyvinyl chloride paste (3) for the absorption of the latter in that the excess paste is removed by pressing the strip-type pieces against one another until intimate contact of at least parts of the surfaces thereof is obtained and in that, in this compressed state, the material (1') is subjected to heating (7) until mutual bonding of the surfaces pressed against one another is obtained and the polyvinyl chloride paste added has at least partly hardened.

8. Method according to claim 7, characterised in that the heating is magnetron heating.

9. Method according to claim 7 or 8, characterised in that the formed object is coated on the outside with polyvinyl chloride by extrusion.

10. Use of the method from one or more of claims 5 to 9 inclusive for forming a reinforced plastic beam.

## Patentansprüche

1. Verfahren zum Formen eines Gegenstandes aus verstärktem Kunststoff, wobei faserverstärktes thermoplastisches Material (1) in eine passende Form umgewandelt wird, wobei wenigstens Teile der verfügbaren Oberflächen in sehr guten Kontakt miteinander gebracht werden und das derart zusammengefügte Material (1') solange einer Erwärmung unterzogen wird, bis eine Verbindung der aneinanderliegenden Oberflächen erreicht wird, der eine Kühlung bis unterhalb des Erweichungspunktes des thermoplastischen Materials bei Erhalt des sehr guten Kontaktes folgt, dadurch **gekennzeichnet**, daß die passende Form derart ausgebildet ist, daß die verstärkende Wirkungsweise und der Zusammenhalt der verstärkenden Faser beibehalten wird, und daß bevor die Oberflächen in sehr guten Kontakt miteinander gebracht werden eine Menge von ungehärtetem Überzugsmaterial (3) aufgebracht wird, welches wenigstens einen Anteil von Kunststoff enthält, welcher auf Wunsch derselbe Kunststoff wie der Kunststoff des faserverstärkten Kunststoffmaterials (1) ist.

2. Verfahren nach Anspruch 1, dadurch gekennzeichnet, daß dem faserverstärkten thermoplastischen Material (1) ein zusätzlicher Anteil an verstärkendem Material zugegeben wird, bevor die Oberflächen der faserverstärkten Materialien in sehr guten Kontakt miteinander gebracht werden.

3. Verfahren nach einem oder mehreren der Ansprüche 1 bis 2, dadurch gekennzeichnet, daß das thermoplastische Material in dem faserverstärkten Material (1) ein Kunststoff mit einer polaren Beschaffenheit ist und daß die Erwärmung eine Mikrowellenerwärmung (7) ist.

4. Verfahren nach einer oder mehreren der Ansprüche 1 bis 3, dadurch gekennzeichnet, daß im Anschluß an den Verfahrensschritt der Erwärmung (7) eine den Gegenstand umgebende Kunststoffbeschichtung (9) unter Verwendung konventioneller Techniken (8) aufgebracht wird.

5. Verfahren nach Anspruch 4, dadurch gekennzeichnet, daß ein geformter Gegenstand mittels Extrusion mit einem passenden Kunststoff, dessen Beschaffenheit der des thermoplastischen Kunststoffs des faserverstärkten Materials entspricht, überzogen wird.

6. Verfahren nach einem oder mehreren der Ansprüche 1 bis 5, dadurch gekennzeichnet, daß das Kunststoffmaterial (1) mit Polyester-Gewebe verstärktes Polyvinylchlorid ist.

7. Verfahren nach Anspruch 6, dadurch gekennzeichnet, daß streifenartige Stücke von Material dadurch zusammengefügt werden, daß das zusammengefügte Material (1) durch einen Polyvinylchlorid-Masse (3) enthaltenden Behälter (2) hindurchgeführt wird, um diese aufzusaugen, daß der Überschuß an Masse entfernt wird durch Aneinanderdrücken der streifenartigen Stücke gegeneinander bis ein sehr guter Kontakt zumindest von Teilen ihrer Oberflächen erreicht wird, und daß das Material (1') in diesem zusammengedrückten Zustand einer Erwärmung (7) unterzogen wird, bis eine gegenseitige Verbindung der aneinandergedrückten Oberflächen erreicht wird und die hinzugefügte Polyvinylchlorid-Masse zumindest teilweise ausgehärtet ist.

8. Verfahren nach Anspruch 7, dadurch gekennzeichnet, daß die Erwärmung eine Magnetronerwärmung ist.

9. Verfahren nach ANspruch 7 oder 8, dadurch gekennzeichnet, daß der geformte Gegenstand an der Außenseite mittels Extrusion mit Polyvinylchlorid überzogen wird.

10. Verwendung des Verfahrens nach einem oder mehreren der Ansprüche 5 bis 9 zum Formen von verstärkten Kunststoffbalken.

## Revendications

1. Procédé de formation d'un objet à partir de matière plastique renforcée dans lequel un matériau thermoplastique renforcé par des fibres (1) est converti en une forme convenable, au moins des parties des surfaces disponibles sont mises en contact intime les unes avec les autres et le matériau (1') ainsi réuni est soumis à un chauffage jusqu'à ce que l'on obtienne un rattachement des surfaces se trouvant au contact les unes des autres, ce que l'on fait suivre d'un refroidissement en dessous du point de ramollissement du matériau thermoplastique tout en maintenant le contact intime, caractérisé en ce que cette forme convenable est telle que la fonction de renforcement et la cohésion de la fibre de renforcement soient préservées et que, avant de mettre les surfaces en contact intime, une quantité de matériau de revêtement non durci (3) soit appliquée, contenant au moins une quantité de matière plastique, qui est éventuellement la même matière plastique que celle du matériau plastique (1) renforcé par des fibres.

2. Procédé selon la revendication 1, caractérisé en ce qu'une quantité supplémentaire de matériau de renforcement est ajoutée au matériau thermoplastique renforcé par des fibres (1), avant de mettre en contact intime les unes avec les autres les surfaces du matériau renforcé par des fibres.

3. Procédé selon une ou plusieurs des revendications précédentes 1 à 2 comprises, caractérisé en ce que la matière thermoplastique du matériau (1) renforcé par des fibres est une matière plastique polaire et le chauffage est un chauffage (7) micro-ondes.

4. Procédé selon une ou plusieurs des revendications 1 à 3, caractérisé en ce que, à la suite de l'étape de chauffage (7), un revêtement (9) en matière plastique encapsulant l'objet est appliqué par l'utilisation de techniques classiques (8).

5. Procédé selon la revendication 4, caractérisé en ce qu'un objet formé est revêtu par extrusion d'une matière plastique convenable dont la nature correspond à la nature de la substance thermoplastique du matériau renforcé par des fibres.

6. Procédé selon une ou plusieurs des revendications 1 à 5, caractérisé en ce que la matière plastique (1) est du chlorure de polyvinyle renforcé par un tissu de polyester.

7. Procédé selon la revendication 6, caractérisé en ce que des morceaux de matériau sous forme de bande sont réunis, en ce que le matériau (1) réuni est passé à travers un réservoir (2) contenant de la pâte (3) de chlorure de polyvinyle pour que cette dernière soit absorbée, en ce que la pâte en excès est retirée par le pressage des morceaux sous forme de bande l'un contre l'autre jusqu'à ce qu'un contact intime d'au moins des parties de leurs surfaces soit obtenu et en ce que, dans cet état comprimé, le matériau (1') est soumis à un chauffage (7) jusqu'à ce que soit obtenu un rattachement mutuel des surfaces pressées l'une contre l'autre et que la pâte de chlorure de polyvinyle ajoutée soit au moins partiellement durcie.

8. Procédé selon la revendication 7, caractérisé en ce que le chauffage est un chauffage au magnétron.

9. Procédé selon la revendication 7 ou 8, caractérisé en ce que l'objet formé est revêtu à l'extérieur par extrusion, de chlorure de polyvinyle.

10. Utilisation du procédé selon une ou plusieurs des revendications 5 à 9 comprises, pour former une poutre en matériau plastique renforcé.
